# EUROPEAN PATENT SPECIFICATION

(11) **EP 1 710 274 B1**
(45) Date of publication and mention of the grant of the patent: **05.12.2007**
(21) Application number: 06112114.1
(22) Date of filing: 31.03.2006
(51) Int. Cl.: C08K 3/04, B60C 1/00, C08K 7/24

(54) **Pneumatic tire having a rubber component containing exfoliated graphite**
Luftreifen mit einer Kautschukkomponente enthaltend Blähgraphit
Pneumatique possedant un élément en caoutchouc contenant graphite exfolié

(30) Priority: 07.04.2005 US 100733
(43) Date of publication of application: 11.10.2006
(73) Proprietor: THE GOODYEAR TIRE & RUBBER COMPANY, Akron, Ohio 44316-0001 (US)
(72) Inventor: Lechtenboehmer, Annette, L-9048 Ettelbruck (LU)
(74) Representative: Kutsch, Bernd

(56) References cited:
- EP-A- 0 644 233
- EP-A- 1 508 590
- JP-A- 2003 246 883
- US-A1- 2003 191 249

## Description

### Background of the Invention

Pneumatic rubber tires are conventionally prepared with at least one component, such as, for example, a rubber tread, which is often a blend of various rubbers and reinforced with conventional, granular carbon black.

The characteristics of carbon black are a significant factor in determining various properties of a rubber composition with which the carbon black is compounded. Conventionally, for rubber reinforcement, tire tread rubber compositions use high surface area, elastomeric reinforcing granular carbon blacks for a purpose of providing tread rubber compositions with good traction and abrasion resistance. On the other hand, in order to enhance the fuel efficiency of a motorized vehicle, a decrease in the rolling resistance of the tire tread portion is desirable. There are some indications that this has been achieved, for example, by increasing the resilience of the rubber by using carbon blacks having a large particle diameter and a small surface area or granular carbon blacks having a wide range of aggregate size distribution per given particle diameter.

It is believed to be conventional wisdom that a tire tread composition designed to improve tread traction on the road usually results in a tire's increased tire rolling resistance. Similarly, modifying a tire tread composition to improve (reduce) a tire's rolling resistance usually results in a reduction in the tire tread traction and/or treadwear resistance. It is usually difficult to impart both high abrasion resistance and high resilience to the rubber at the same time, because the requirements have been thought to be somewhat contradictory with each other from the perspective of the properties of the granular carbon black in the rubber. These aspects involving a trade-off of tire, or tire tread, properties (traction, rolling resistance and treadwear) are well known to those having skill in such art. Thus, selection of various reinforcing carbon blacks tend to play a role in the ultimate properties of the rubber composition.

### Summary of the Invention

The present invention relates to pneumatic tire having a component comprising exfoliated graphite intercalated with an elastomer; and at least one additional diene based elastomer, according to claim 1.

### Detailed Description of the Invention

There is disclosed a pneumatic tire having a component comprising exfoliated graphite intercalated with an elastomer and at least one additional diene based elastomer.

As disclosed in US-B- 6,802,784, graphite consists of a plurality of layered planes of hexagonal arrays or networks of carbon atoms. The layered planes of hexagonally arranged carbon atoms are substantially flat and are oriented substantially parallel to one another. The carbon atoms on a single layered plane are covalently bonded together, and the layered planes are bonded by substantially weaker van der Waals forces. Graphite is also an anisotropic structure and exhibits many properties that are highly directional. Graphite also possesses a high degree of orientation. Graphite includes natural graphite, Kish graphite and synthetic graphite. Natural graphite is found in nature. Kish graphite is the excess carbon, which crystallizes in the course of smelting iron. Synthetic graphite is produced by pyrolysis or thermal decomposition of a carbonaceous gas at elevated temperatures above 2500°C.

Two axes or directions are commonly associated with graphite. The "c" axis is generally the direction perpendicular to the layered planes. The "a" axis is generally the direction parallel to the layered plane, or the direction perpendicular to the "c" direction. Since the size of the individual graphite solids is measured in micrometers (microns), nanometers or Angstroms, the terms nanostructure(s) and nanosheet(s) denote the structure of graphite in its unaltered, natural, intercalated, expanded, exfoliated or compressed after expanded form. The term nanosheet(s) further denotes layered planes of graphite.

Graphite fillers are available commercially in powder form from Asbury Graphite, Inc. in Asbury, N.J. and Poco Graphite Inc, in Decatur, Tex. in the United States, or from Shandong Qingdao Company.

In one embodiment, graphite in its unaltered form is intercalated to insert atoms or molecules in the inter-planar spaces between the layered planes. The intercalated graphite is then expanded or exfoliated by sudden exposure to high heat to expand the inter-planar spacing between the layered planes. The exfoliated graphite is then mixed with suitable monomers and other additives prior to in situ polymerization to form nanosheets of graphite dispersed in an elastomeric matrix. The elastomeric matrix with graphite nanosheets dispersed therein may be formed into one or more components of a tire, or it may be blended with other elastomers to form one or more components of a tire.

The weak inter-planar van der Waals bonding forces allow the layered planes to be intercalated. In other words, the weaker van der Waals forces allows certain atoms or molecules to enter and remain within the inter-planar spaces between the layered planes. A preferred method to intercalate graphite is immersing the graphite in a solution containing an oxidizing agent. Suitable oxidizing agents include solutions containing nitric acid, potassium chlorate, chromic acid, potassium permanganate, potassium chromate, potassium dichromate, perchloric acid and the like, or mixtures, such as concentrated nitric acid and chlorate, chromic acid and phosphoric acid, sulfuric acid and nitric acid, or mixtures of a strong organic acid, e.g., trifluoroacetic acid, and a strong oxidizing agent soluble in the organic acid.

Preferably, the intercalating agent is a solution containing a mixture of X/Y, wherein X can be sulfuric acid or sulfuric acid and phosphoric acid and Y is an oxidizing agent, such as nitric acid, perchloric acid, chromic acid, potassium permanganate, sodium nitrate, hydrogen peroxide, iodic or periodic acids. More preferably, the intercalating agent is a solution comprising 80% by volume of sulfuric acid and 20% by volume of nitric acid. Preferably, the graphite is immersed in the sulfuric and nitric acid solution for up to 24 hours, or more. The resulting material, also known as graphite intercalated compound, comprises layered planes of carbon and intercalate layers stacked on top of one another in a periodic fashion. Typically, one to five layers of carbon can be present between adjacent intercalate layers. The preferred quantity of intercalated solution is from 10 parts to 150 parts of solution to 100 parts of graphite, more preferably from 50 parts to 120 parts to 100 parts of graphite.

Alternatively, the intercalating process can be achieved by other chemical treatments. For example, the intercalating agents may include a halogen, such as bromine, or a metal halide such as ferric chloride, aluminum chloride, or the like. A halogen, particularly bromine, may be intercalated by contacting graphite with bromine vapors, or with a solution of bromine in sulfuric acid, or with bromine dissolved in a suitable organic solvent. Metal halides can be intercalated by contacting the graphite with a suitable metal halide solution. For example, ferric chloride can be intercalated by contacting graphite with an aqueous solution of ferric chloride, or with a mixture of ferric chloride and sulfuric acid.

Other suitable intercalating agents include, but are not limited to, chromyl chloride, sulfur trioxide, antimony trichloride, chromium(III)chloride, iodine chloride, chromium(IV)oxide, gold(III)chloride, indium chloride, platinum(IV)chloride, chromyl fluoride, tantalum(V)chloride, samarium chloride, zirconium(IV)chloride, uranium chloride, and yttrium chloride.

The intercalated graphite is then washed with water until excess intercalating agent is washed from the graphite, or if acid is used until the washed water's pH value is neutral. The graphite is then preferably heated to above the boiling point of the washed solution to evaporate the washed solution. Alternatively, to eliminate the post-intercalation washing step the amount of intercalated solution may be reduced to 10 parts to 50 parts per 100 parts of graphite as disclosed in US-B- 4,895,713.

To expand or exfoliate the inter-planar spacing between the layered planes, the intercalated graphite is exposed to very high heat in a relatively short amount of time. Without being bound by any particular theory, the exfoliated mechanism is the decomposition of the trapped intercalating agent, such as sulfuric and nitric acids (H₂ SO₄ +HNO₃), between the highly oriented layered planes when exposed to heat.

Suitable exfoliated processes include heating the intercalated graphite for a few seconds at temperatures of at least greater than 500°C, more preferably greater than 700°C, and more typically 1000°C or more. The treated graphite typically expands in the "c" direction 100 to more than 300 times the pre-treatment thickness. In one preferred exfoliating process, the intercalated graphite is exposed to temperature of 1050°C for 15 seconds to achieve a thickness in the "c" direction of 300 times of that in the pre-exfoliated graphite. For natural graphite with original thickness of 0.4 µm to 60 µm, the thickness of exfoliated graphite can be in the range of 2 µm to 20,000 µm.

The exfoliated graphite is a loose and porous form of graphite. It also has worm-like or vermicular appearance. The exfoliated graphite comprises parallel layers, which have collapsed and deformed irregularly forming pores of varying sizes on the layers. In accordance to a study entitled "Dispersion of Graphite Nanosheets in a Polymeric Matrix and the Conducting Property of the Nanocomposites" by G. H. Chen, D. J. Wu, W. G. Weng and W. L. Yan, published in the Polymer Engineering and Science, Vol. 41, No. 12 (December 2001), individual sheet or layer of graphite has a thickness in the range of 100 nm to 400 nm. This study reports that exfoliated graphite comprises carbon layers and graphite nanosheets, which include thin parallel sheets with thickness of less than 5 nm, and that the gallery spacing between nanosheets of 10 nm.

The exfoliated graphite may be mixed with one or more monomers in a suitable polymerization medium and subjected to suitable polymerization or vulcanization conditions to form an elastomer with nanosheets of exfoliated graphite dispersed therein; this is also referred to herein as an exfoliated graphite intercalated with elastomer. The exfoliated graphite may also react with the monomer or monomers to become a part of the structure of the elastomer. The nanosheets may retain its structure in the elastomer matrix, and the monomer or elastomer may enter the gallery spacing between the nanosheets. The dispersion of nanosheets of exfoliated graphite in the elastomeric matrix may improve the tensile strength of the polymer. This improved tensile strength of the elastomer/graphite composite may improve its impact strength.

Suitable monomers for polymerization to elastomeric matrix in the presence of the exfoliated graphite include any typically utilized in the synthesis of elastomers suitable for use in tires. Suitable monomers include those utilized in the synthesis of homopolymerization products of butadiene and its homologues and derivatives, for example, methyl butadiene, dimethylbutadiene and pentadiene as well as monomers resulting in copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers intercalated into the exfoliated graphite may include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate. Additional examples of rubbers which may be intercalated into exfoliated graphite include a carboxylated rubber, silicon-coupled and tin-coupled star-branched polymers. The preferred rubber or elastomers to be intercalated into exfoliated graphite are polybutadiene, SBR, and synthetic and natural polyisoprene.

Suitable SBR intercalated into the exfoliated graphite may utilize solution or emulsion polymerization techniques as are known in the art. Suitable solution polymerized styrene-butadiene rubbers may be made, for example, by organo lithium catalyzation in the presence of an organic hydrocarbon solvent. By emulsion polymerization prepared E-SBR, it is meant that styrene and 1,3-butadiene are copolymerized as an aqueous emulsion. Such are well known to those skilled in such art. Suitable polybutadiene rubbers may be prepared, for example, by organic solution polymerization of 1,3-butadiene. The BR may be conveniently characterized, for example, by having at least a 90 percent cis 1,4-content.

In one embodiment, the elastomeric matrix materials intercalated into the exfoliated graphite include styrene-butadiene rubber, polyisoprene, polybutadiene, copolymers comprising ethylene or propylene such as ethylene-propylene rubber (EPR) or ethylene-propylene diene monomer (EPDM) elastomer.

In one embodiment, 10 to 100 phr of exfoliated graphite intercalated with elastomer is present in the rubber component of the tire. In another embodiment, from 20 to 60 phr of exfoliated graphite intercalated with elastomer is present in the rubber component of the tire.

In addition to the exfoliated graphite intercalated with elastomer, the rubber component contains at least one additional rubber containing olefinic unsaturation. The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate. Additional examples of rubbers which may be used include a carboxylated rubber, silicon-coupled and tin-coupled star-branched polymers. The preferred rubber or elastomers are polybutadiene, SBR, and synthetic and natural polyisoprene.

In one aspect, the additional rubber to be combined with the intercalated exfoliated graphite may be a blend of at least two diene based rubbers. For example, a blend of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene butadiene rubbers, cis 1,4-polybutadiene rubbers and emulsion polymerization prepared butadiene/acrylonitrile copolymers.

In one aspect of this invention, an emulsion polymerization derived styrene butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

When used in the tire component, the relatively high styrene content of 30 to 45 for the E-SBR can be considered beneficial for a purpose of enhancing traction, or skid resistance. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36 percent. The S-SBR can be conveniently prepared, for example, by organo lithium catalyzation in the presence of an organic hydrocarbon solvent.

A purpose of using S-SBR is for improved tire rolling resistance as a result of lower hysteresis when it is used in a tire component composition.

The 3,4-polyisoprene rubber (3,4-PI) is considered beneficial for a purpose of enhancing the tire's traction when it is used in a tire tread composition. The 3,4-PI and use thereof is more fully described in US-B-5,087,668.

The cis 1,4-polybutadiene rubber (BR) is considered to be beneficial for a purpose of enhancing the tire tread's wear, or treadwear. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

In addition to the exfoliated graphite intercalated with elastomer and additional rubber in the rubberized component of the tire, conventional fillers may be also present. The amount of such conventional fillers may range from 10 to 250 phr. Preferably, the filler is present in an amount ranging from 20 to 100 phr.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc.

Commonly employed carbon blacks can be used as a conventional filler. Representative examples of such carbon blacks include N110, N115, N121, N134, N220, N231, N234, N242, N293, N299, S315, N326, N330, M332, N339, N343, N347, N351, N358, N375, N539, N550, N582, N630, N642, N650, N660, N683, N754, N762, N765, N774, N787, N907, N908, N990 and N991. These carbon blacks have iodine absorptions ranging from 9 to 170 g/kg and DBP No. ranging from 34 to 150 cm³/100 g.

Other conventional fillers may be used in the rubber composition including particulate fillers including ultra high molecular weight polyethylene (UHMWPE), particulate polymer gels such as those disclosed in US-B-6,242,534; US-B- 6,207,757; US-B- 6,133,364; US-B- 6,372,857; US-B-5,395,891; or US-B- 6,127,488, and plasticized starch composite filler such as that disclosed in US-B- 5,672,639.

It may be preferred to have the rubber composition for use in the tire component to additionally contain a conventional sulfur containing organosilicon compound. Examples of suitable sulfur containing organosilicon compounds are of the formula:

Z―Alk―Sₙ―Alk―Z

in which Z is selected from the group consisting of 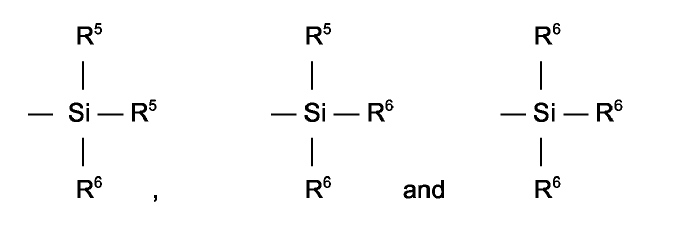 where R⁵ is an alkyl group of 1 to 4 carbon atoms, cyclohexyl or phenyl; R⁶ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide.
Therefore as to the above formula, preferably Z is 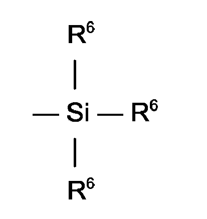 where R⁶ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

The amount of the sulfur containing organosilicon compound of the above formula in a rubber composition will vary depending on the level of other additives that are used. Generally speaking, the amount of the compound of the above formula will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur vulcanized material (rubbers), the additives mentioned above are selected and commonly used in conventional amounts.

The mixing of the rubber composition can be accomplished by methods known to those having skill in the rubber mixing art.

The rubber composition may be incorporated in a variety of rubber components of the tire. For example, the rubber component may be a tread (including tread cap and tread base), sidewall, apex, chafer, sidewall insert, wirecoat, innerliner, and ply coat. In one embodiment, the compound is a sidewall insert.

The pneumatic tire of the present invention may be a passenger tire, motorcycle tire, aircraft tire, agricultural, earthmover, off-the-road, truck tire and the like. The term "truck tire" includes light truck, medium truck and heavy truck. Preferably, the tire is a passenger or truck tire. The tire may also be a radial or bias, with a radial being preferred.

## Claims

1. A pneumatic tire having a component comprising:
exfoliated graphite intercalated with an elastomer; and
at least one additional diene based elastomer.

2. The pneumatic tire of claim 1, wherein from 10 to 100 parts by weight, per 100 parts by weight of rubber, of said exfoliated graphite intercalated with an elastomer is present.

3. The pneumatic tire of claim 1 or 2, wherein from 20 to 60 parts by weight, per 100 parts by weight of rubber, of said exfoliated graphite intercalated with an elastomer is present.

4. The pneumatic tire of at least one of the previous claims, wherein said exfoliated graphite is intercalated with an elastomer selected from the group consisting of polychloroprene, polybutadiene, polyisoprene, butyl rubber, chlorobutyl rubber, bromobutyl rubber, styrene/isoprene/butadiene rubber, and copolymers of 1,3-butadiene with styrene, copolymers of 1,3-butadiene with acrylonitrile , copolymers of 1,3-butadiene with methyl methacrylate, copolymers of isoprene with styrene, copolymers of isoprene with acrylonitrile , and copolymers of isoprene with methyl methacrylate.

5. The pneumatic tire of claim 4, wherein said exfoliated graphite is intercalated with an elastomer selected from the group consisting of polybutadiene, styrene-butadiene rubber, and polyisoprene.

6. The pneumatic tire of at least one of the previous claims, wherein the at least one additional diene based elastomer is selected from the group consisting of polychloroprene, polybutadiene, polyisoprene, butyl rubber, chlorobutyl rubber, bromobutyl rubber, styrene/isoprene/butadiene rubber, and copolymers of 1,3-butadiene with styrene, copolymers of 1,3-butadiene with acrylonitrile, copolymers of 1,3-butadiene with methyl methacrylate, copolymers of isoprene with styrene, copolymers of isoprene with acrylonitrile , and copolymers of isoprene with methyl methacrylate.

7. The pneumatic tire of at least one of the previous claims, wherein said exfoliated graphite is present as dispersed nanosheets having a thickness of from 100 nm to 400 nm.

8. The pneumatic tire of at least one of the previous claims, wherein the component further comprises 10 to 250 phr of a filler selected from carbon black and silica.

9. The pneumatic tire of claim 8 wherein said filler comprises silica.

10. The pneumatic tire of claim 8 wherein said filler comprises carbon black.

## Patentansprüche

1. Luftreifen mit einem Bauteil, umfassend :
mit einem Elastomer interkalierten Blähgraphit ; und
mindestens ein zusätzliches dienbasiertes Elastomer.

2. Luftreifen nach Anspruch 1, wobei 10 bis 100 Gewichtsteile pro 100 Gewichtsteile Kautschuk des mit einem Elastomer interkalierten Blähgraphits vorliegen.

3. Luftreifen nach Anspruch 1 oder 2, wobei 20 bis 60 Gewichtsteile pro 100 Gewichtsteile Kautschuk des mit einem Elastomer interkalierten Blähgraphits vorliegen.

4. Luftreifen nach mindestens einem der vorhergehenden Ansprüche, wobei der Blähgraphit mit einem Elastomer interkaliert ist, ausgewählt aus der aus Polychloropren, Polybutadien, Polyisopren, Butylkautschuk, Chlorbutylkautschuk, Brombutylkautschuk, Styrol-Isopren-Butadien-Kautschuk, und Copolymeren von 1,3-Butadien mit Styrol, Copolymeren von 1,3-Butadien mit Acrylnitril, Copolymeren von 1,3-Butadien mit Methylmethacrylat, Copolymeren von Isopren mit Styrol, Copolymeren von Isopren mit Acrylnitril und Copolymeren von Isopren mit Methylmethacrylat bestehenden Gruppe.

5. Luftreifen nach Anspruch 4, wobei der Blähgraphit mit einem Elastomer interkaliert ist, ausgewählt aus der aus Polybutadien, Styrol-Butadien-Kautschuk und Polyisopren bestehenden Gruppe.

6. Luftreifen nach mindestens einem der vorhergehenden Ansprüche, wobei das mindestens eine zusätzliche dienbasierte Elastomer aus der aus Polychloropren, Polybutadien, Polyisopren, Butylkautschuk, Chlorbutylkautschuk, Brombutylkautschuk, Styrol-Isopren-Butadien-Kautschuk, und Copolymeren von 1,3-Butadien mit Styrol, Copolymeren von 1,3-Butadien mit Acrylnitril, Copolymeren von 1,3-Butadien mit Methylmethacrylat, Copolymeren von Isopren mit Styrol, Copolymeren von Isopren mit Acrylnitril und Copolymeren von Isopren mit Methylmethacrylat bestehenden Gruppe ausgewählt ist.

7. Luftreifen nach mindestens einem der vorhergehenden Ansprüche, wobei der Blähgraphit als dispergierte Nanoplatten mit einer Dicke von 100 nm bis 400 nm vorhanden ist.

8. Luftreifen nach mindestens einem der vorhergehenden Ansprüche, wobei das Bauteil weiter 10 bis 250 ThK eines aus Carbon Black und Silika ausgewählten Füllstoffs umfasst.

9. Luftreifen nach Anspruch 8, wobei der Füllstoff Silika umfasst.

10. Luftreifen nach Anspruch 8, wobei der Füllstoff Carbon Black umfasst.

## Revendications

1. Bandage pneumatique possédant un composant comprenant :
du graphite exfolié intercalé dans un élastomère ; et
au moins un élastomère supplémentaire à base diénique.

2. Bandage pneumatique selon la revendication 1, dans lequel ledit graphite exfolié intercalé dans un élastomère est présent à concurrence de 10 à 100 parties en poids, par 100 parties en poids de caoutchouc.

3. Bandage pneumatique selon la revendication 1 ou 2, dans lequel ledit graphite exfolié intercalé dans un élastomère est présent à concurrence de 20 à 60 parties en poids, par 100 parties en poids de caoutchouc.

4. Bandage pneumatique selon au moins une des revendications précédentes, dans lequel ledit graphite exfolié est intercalé dans un élastomère choisi parmi le groupe constitué par le polychloroprène, le polybutadiène, le polyisoprène, du caoutchouc butyle, du caoutchouc chlorobutyle, du caoutchouc bromobutyle, du caoutchouc de styrène/isoprène/butadiène et des copolymères du 1,3-butadiène avec du styrène, des copolymères du 1,3-butadiène avec de l'acrylonitrile, des copolymères du 1,3-butadiène avec du méthacrylate de méthyle, des copolymères d'isoprène avec du styrène, des copolymères d'isoprène avec de l'acrylonitrile, et des copolymères d'isoprène avec du méthacrylate de méthyle.

5. Bandage pneumatique selon la revendication 4, dans lequel ledit graphite exfolié est intercalé dans un élastomère choisi par le groupe constitué par le polybutadiène, un caoutchouc de styrène-butadiène et du polyisoprène.

6. Bandage pneumatique selon au moins une des revendications précédentes, dans lequel ledit au moins un élastomère supplémentaire à base diénique est choisi parmi le groupe constitué par le polychloroprène, le polybutadiène, le polyisoprène, du caoutchouc butyle, du caoutchouc chlorobutyle, du caoutchouc bromobutyle, du caoutchouc de styrène/isoprène/butadiène et des copolymères du 1,3-butadiène avec du styrène, des copolymères du 1,3-butadiène avec de l'acrylonitrile, des copolymères du 1,3-butadiène avec du méthacrylate de méthyle, des copolymères d'isoprène avec du styrène, des copolymères d'isoprène avec de l'acrylonitrile, et des copolymères d'isoprène avec du méthacrylate de méthyle.

7. Bandage pneumatique selon au moins une des revendications précédentes, dans lequel ledit graphite exfolié à présent sous la forme de nanofeuilles dispersées possédant une épaisseur de 100 nm à 400 nm.

8. Bandage pneumatique selon au moins une des revendications précédentes, dans lequel le composant comprend en outre une matière de charge choisie parmi le groupe comprenant du noir de carbone et de la silice, à concurrence de 10 à 250 phr.

9. Bandage pneumatique selon la revendication 8, dans lequel ladite matière de charge comprend de la silice.

10. Bandage pneumatique selon la revendication 8, dans lequel ladite matière de charge comprend du noir de carbone.
